# EUROPEAN PATENT APPLICATION

(11) **EP 4 492 698 A1**
(43) Date of publication of application: **15.01.2025**
(21) Application number: 22930325.0
(22) Date of filing: 11.03.2022
(51) Int. Cl.: H04B 5/00

(54) **WIRELESS COMMUNICATION METHOD, TERMINAL DEVICE, AND CARRIER TRANSMITTING DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2022/080323
(87) International publication number: WO 2023/168687

(57) **Abstract**

A wireless communication method, a terminal device and a carrier transmitting device are provided by the embodiments of the present disclosure, and the method includes: receiving a carrier signal transmitted by a carrier transmitting device; transmitting a back scattering signal to the carrier transmitting device according to the carrier signal; where a frequency-domain resource characteristic of the back scattering signal is related to a frequency-domain resource of the carrier signal. Since the frequency-domain resource characteristic of the back scattering signal is related to the frequency-domain resource of the carrier signal, the terminal device does not need to judge by itself whether the back scattering signal meets an OCB requirement, and the carrier transmitting device only needs to properly set the frequency-domain resource occupied by the carrier signal, that is, a bandwidth occupied by the carrier signal, so that the back scattering signal may meet the OCB requirement, and thus, power consumption of the terminal device may be reduced.

## Description

### TECHNICAL FIELD

Embodiments of the present disclosure relate to the field of communication, and in particular, to a wireless communication method, a terminal device, and a carrier transmitting device.

### BACKGROUND

A zero-power consumption terminal is widely used in a cellular communication system, such as passive Internet of Things, due to its characteristics such as low cost, low complexity and low power consumption. The use of an unlicensed frequency band is an important deployment in the cellular communication system.

In order to avoid sub-band interference to a signal transmitted on an unlicensed spectrum channel and to improve the accuracy of detection of a communication device when detecting the channel of the unlicensed spectrum, the design of the unlicensed spectrum should meet a related requirement of an occupied channel bandwidth (OCB), that is, the signal transmission bandwidth should occupy a certain preset proportion of the channel bandwidth. For example, the signal transmission bandwidth occupies 80% of a 5 GHz frequency band or the signal transmission bandwidth occupies 70% of a 60 GHz frequency band. Then, for the zero-power consumption terminal, how to make a back scattering signal meet the OCB requirement is a technical problem to be solved urgently in this application.

### SUMMARY

A wireless communication method, a terminal device, and a carrier transmitting device are provided by the embodiments of the present disclosure. Considering that a frequency-domain resource characteristic of a back scattering signal is related to a frequency-domain resource of a carrier signal, the terminal device does not need to judge by itself whether the back scattering signal meets an OCB requirement, and the carrier transmitting device only needs to properly set the frequency-domain resource occupied by the carrier signal, that is, a bandwidth occupied by the carrier signal, so that the back scattering signal may meet the OCB requirement.

In a first aspect, a wireless communication method is provided, including: receiving a carrier signal transmitted by a carrier transmitting device; transmitting a back scattering signal to the carrier transmitting device according to the carrier signal; where a frequency-domain resource characteristic of the back scattering signal is related to a frequency-domain resource of the carrier signal.

In a second aspect, a wireless communication method is provided, including: transmitting a carrier signal to a terminal device, so that the terminal device transmits a back scattering signal to a carrier transmitting device according to the carrier signal; where a frequency-domain resource characteristic of the back scattering signal is related to a frequency-domain resource of the carrier signal.

In a third aspect, a terminal device is provided, including: a communication unit, configured to receive a carrier signal transmitted by a carrier transmitting device; transmitting a back scattering signal to the carrier transmitting device according to the carrier signal; where a frequency-domain resource characteristic of the back scattering signal is related to a frequency-domain resource of the carrier signal.

In a fourth aspect, a carrier transmitting device is provided, including: a communication unit, configured to transmit a carrier signal to a terminal device, so that the terminal device transmits a back scattering signal to the carrier transmitting device according to the carrier signal; where a frequency-domain resource characteristic of the back scattering signal is related to a frequency-domain resource of the carrier signal.

In a fifth aspect, a terminal device is provided, including a processor and a memory. The memory is configured to store a computer program, and the processor is configured to invoke and execute the computer program stored in the memory to perform the method in the above first aspect or its various implementations.

In a sixth aspect, a carrier transmitting device is provided, including a processor and a memory. The memory is configured to store a computer program, and the processor is configured to involve and execute the computer program stored in the memory, to perform the method in the above second aspect or its various implementations.

In a seventh aspect, an apparatus is provided, which is configured to implement the method in any one of the above first aspect to the above second aspect or their various implementations.

Specifically, the apparatus includes: a processor, configured to invoke and execute a computer program from a memory, to cause a device equipped with the apparatus to perform the method in any one of the above first aspect to the above second aspect or their various implementations.

In an eighth aspect, a computer readable storage medium is provided, which is configured to store a computer program, where the computer program causes a computer to perform the method in any one of the above first aspect to the above second aspect or their various implementations.

In a ninth aspect, a computer program product is provided, including a computer program instruction, where the computer program instruction causes a computer to perform the method in any one of the above first aspect to the above second aspect or their various implementations.

In a tenth aspect, a computer program is provided, where the computer program, when being executed on a computer, causes the computer to perform the method in any one of the above first aspect to the above second aspect or their various implementations.

Through the technical solutions provided by the present disclosure, since the frequency-domain resource characteristic of the back scattering signal is related to the frequency-domain resource of the carrier signal, the terminal device does not need to judge by itself whether the back scattering signal meets an OCB requirement, and the carrier transmitting device only needs to properly set the frequency-domain resource occupied by the carrier signal, that is, a bandwidth occupied by the carrier signal, so that the back scattering signal may meet the OCB requirement, and thus the power consumption of the terminal device may be reduced.

### BRIEF DESCRIPTION OF THE DRAWINGS

FIG. 1 is a schematic diagram of a communication system architecture, provided by the embodiments of the present disclosure;
FIG. 2 is a schematic diagram of a zero-power consumption communication system, provided by the present disclosure;
FIG. 3 is a schematic diagram of back scattering communication, provided by the present disclosure;
FIG. 4 is a schematic diagram of energy harvesting, provided by the embodiments of the present disclosure;
FIG. 5 is a circuit schematic diagram of resistive load modulation, provided by the embodiments of the present disclosure;
FIG.6 is a flow chart of a wireless communication method, provided by the embodiments of the present disclosure;
FIG. 7 is a schematic diagram of a transmission of a carrier signal and a back scattering signal, provided by the embodiments of the present disclosure;
FIG.8 is a schematic diagram of another transmission of a carrier signal and a back scattering signal, provided by the embodiments of the present disclosure;
FIG. 9 is a schematic diagram of an interlace structure of a carrier signal, provided by the embodiments of the present disclosure;
FIG. 10 is a schematic diagram of yet another transmission of a carrier signal and a back scattering signal, provided by the embodiments of the present disclosure;
FIG. 11 is a schematic diagram of yet another transmission of a carrier signal and a back scattering signal, provided by the embodiments of the present disclosure;
FIG. 12 is a schematic diagram of a terminal device1200, provided by the embodiments of the present disclosure;
FIG. 13 is a schematic diagram of a carrier transmitting device 1300, provided by the embodiments of the present disclosure;
FIG. 14 is a schematic structural diagram of a communication device 1400, provided by the embodiments of the present disclosure;
FIG. 15 is a schematic structural diagram of an apparatus, provided by the embodiments of the present disclosure.

### DETAILED DESCRIPTION

The technical solutions in the embodiments of the present disclosure will be described in conjunction with the drawings in the embodiments of the present disclosure, and apparently, the described embodiments are a part of the embodiments of the present disclosure, but not all of the embodiments. For the embodiments of the present disclosure, all other embodiments obtained by the ordinary skilled in the art without paying creative efforts belong to the protection scope of the present disclosure.

It should be understood that the terms herein "system" and "network" are often used interchangeably herein. The term herein "and/or" is only an association relationship for describing associated objects, meaning that there may be three kinds of relationships, for example, A and/or B may mean three cases where: A exists alone, both A and B exist, and B exists alone. In addition, a character "/" herein generally means that related objects before and after "/" are in an "or" relationship.

In the description of the embodiments of the present disclosure, the term "correspondence" may mean that there is a direct correspondence or indirect correspondence between two items, or may also mean that there is an associated relationship between the two items, or may also mean a relationship of indicating and being indicated or a relationship of configuring and being configured, etc.

The embodiments of the present disclosure may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Universal Mobile Telecommunication System (UMTS), a Wireless Local Area Network (WLAN), a Wireless Fidelity (WiFi), a next generation communication system, a zero-power consumption communication system, cellular Internet of Things, cellular passive Internet of Things or other communication systems, etc.

Herein, the cellular Internet of things is a developed outcome of a combination of a cellular mobile communication network and Internet of Things. The cellular passive Internet of Things is also referred to as a passive cellular Internet of Things or passive Internet of Things, which is combined by a network device and passive terminals, where in the cellular passive Internet of Things, a passive terminal may communicate with other passive terminals through the network device, or the passive terminal may communicate by using a device to device (D2D) communication method, and the network device only needs to transmit a carrier signal, that is, an energy supply signal, to supply energy to the passive terminal.

Generally speaking, a number of connections supported by a traditional communication system is limited and is easy to implement, however, with the development of the communication technology, the mobile communication system will not only support traditional communication, but also support, for example, D2D communication, Machine to Machine (M2M) communication, Machine Type Communication (MTC), and Vehicle to Vehicle (V2V) communication, etc., and the embodiments of the present disclosure may also be applied to these communication systems.

Optionally, the communication system in the embodiments of the present disclosure may be applied to a carrier aggregation (CA) scenario, may also be applied to a dual connectivity (DC) scenario, and may also be applied to a standalone (SA) network deployment scenario.

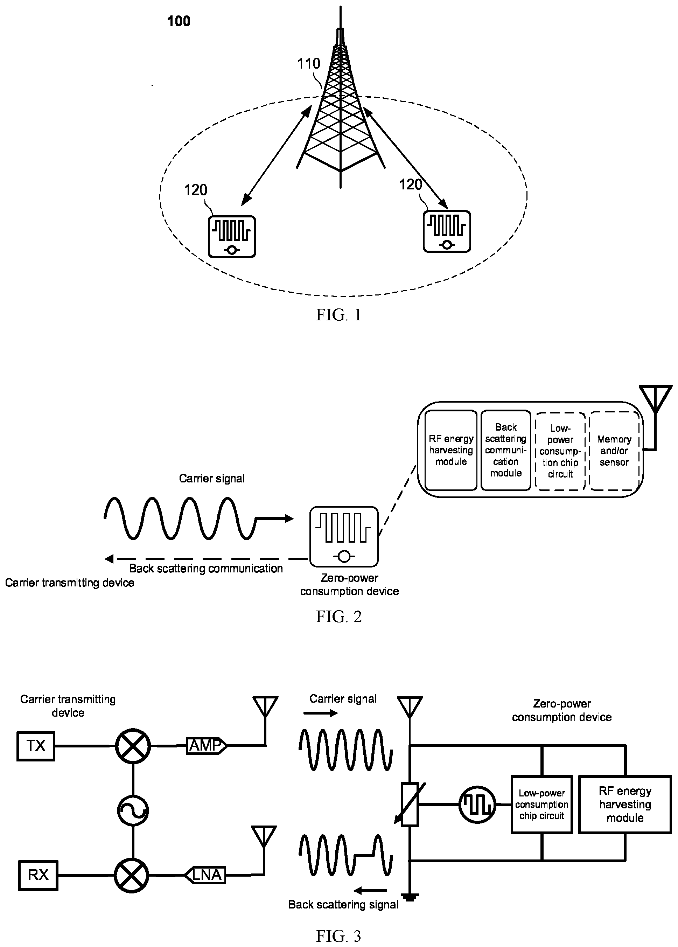

Exemplarily, the communication system 100 applied by the embodiments of the present disclosure is shown in FIG. 1. The communication system 100 may include a carrier transmitting device 110, and the carrier transmitting device 110 may be a device that communicates with a terminal device 120 (also referred to as a communication terminal or a terminal). The carrier transmitting device 110 may provide communication coverage for a specific geographical area, and may communicate with a terminal device located within the coverage area.

FIG. 1 exemplarily shows one carrier transmitting device and two terminal devices, and optionally, the communication system 100 may include a plurality of carrier transmitting devices and may include another number of terminal devices within a coverage range of each carrier transmitting device, which is not limited by the embodiments of the present disclosure.

Optionally, the communication system 100 may also include other network entities such as a network controller and a mobility management entity, etc., which are not limited by the embodiments of the present disclosure.

It should be understood that, in the embodiments of the present disclosure, a device with a communication function in the network/system may be referred to as a communication device. Taking the communication system 100 shown in FIG. 1 as an example, the communication device may include the carrier transmitting device 110 and the terminal device 120 with the communication function, and the carrier transmitting device 110 and the terminal device 120 may be the specific devices described above, which will not be repeated herein; the communication device may also include other devices in the communication system 100, such as a network controller, a mobility management entity, and other network entities, which are not limited by the embodiments of the present disclosure.

In combination with the terminal device and the carrier transmitting device, various embodiments are described by the embodiments of the present disclosure, where the carrier transmitting device may be a network device, which may be a device used for communicating with a mobile device, and the carrier transmitting device may be an Access Point (AP) in the WLAN, a base station (Base Transceiver Station, BTS) in the GSM or CDMA, or may also be a base station (NodeB, NB) in the WCDMA, or may also be an evolutionary base station (Evolutionary Node B, eNB or eNodeB) in the LTE, or a relay station or an access point, or a network device (gNB) of a vehicle-mounted device, a wearable device and an NR network, or a network device in the PLMN network evolved in the future, etc. The carrier transmitting device may also be a terminal device in a cellular network, a station(STA) in the WLAN, or may also be any other device with a carrier transmitting function.

In the embodiments of the present disclosure, the network device may provide a service for a cell, and the terminal device communicates with the network device by a transmission resource (such as a frequency domain resource, or a frequency spectrum resource) used by the cell, the cell may be a cell corresponding to the network device (such as the base station), the cell may belong to a macro base station, or may also belong to a base station corresponding to a small cell, and the small cell herein may include: a metro cell, a micro cell, a pico cell, a femto cell, etc, these small cells have characteristics of small coverage range and low transmission power, which are applicable for providing a data transmission service with high speed.

In the embodiments of the present disclosure, the terminal device (User Equipment, UE) may also be referred to as a user equipment, an access terminal, a user unit, a user station, a mobile station, a mobile platform, a remote station, a remote terminal, a mobile device, a user terminal, a terminal, a wireless communication device, a user agent or a user apparatus, etc. The terminal device may be a station (STATION, ST) in the WLAN, may be a cellular phone, a cordless phone, a Session Initiation Protocol (SIP) phone, a Wireless Local Loop (WLL) station, a personal digital assistant (PDA) device, a handheld device with a wireless communication function, a computing device or other processing devices connected to a wireless modem, a vehicle-mounted device, a wearable device, and a terminal device in a next generation communication system such as an NR network, or a terminal device in a Public Land Mobile Network (PLMN) network evolved in the future, or a zero-power consumption terminal, etc.

As an example but not a limitation, in the embodiments of the present disclosure, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smartwatch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the present disclosure, the terminal device needs other devices, such as the carrier transmitting device, to supply energy for it. Therefore, in the embodiments of the present disclosure, the terminal device may be a zero-power consumption terminal, or of course, may also be any other terminal device that needs to be energized, which is not limited by the present disclosure.

Exemplarily, in a zero-power consumption communication system, the terminal device is mainly energized by the carrier transmitting device, and related technologies of the zero-power consumption communication technology will be explained below.

### 1. Classification of zero-power consumption terminals

Based on energy sources and usages of the zero-power consumption terminals, the zero-power consumption terminals may be divided into the following types.

### (1) Passive zero-power consumption terminal

A passive zero-power consumption terminal does not need an internal battery, and when the passive zero-power consumption terminal is close to the carrier transmitting device, the passive zero-power consumption terminal is within a near field range formed by antenna radiation of the carrier transmitting device, and therefore, an antenna of the passive zero-power consumption terminal generates induced current by electromagnetic induction, and the induced current drives a low-power consumption chip circuit of the passive zero-power consumption terminal, to implement tasks such as signal demodulation of a forward link and signal modulation of a back scattering link. For the back scattering link, the passive zero-power consumption terminal performs a transmission of a signal by using a back scattering implementation.

It can be seen that, either for the forward link or the back scattering link, the passive zero-power consumption terminal does not need the internal battery to drive the low-power consumption chip circuit, and this type of terminal is a true zero-power consumption terminal.

Additionally, a radio frequency circuit and a baseband circuit of the passive zero-power consumption terminal are both very simple. For example, the passive zero-power consumption terminal does not need devices, such as a low noise amplifier (LNA), a power amplifier (PA), a crystal oscillator, an analog-to-digital converter (ADC), etc, and thus, the passive zero-power consumption terminal has many advantages such as small size, light weight, very cheap price, and long service life, etc.

### (2) Semi-passive zero-power consumption terminal

The semi-passive zero-power consumption terminal is not be equipped with a conventional battery itself, but may use a wireless radio frequency (RF) energy harvesting module to harvest radio energy, and at the same time, store the harvested energy in an energy storage unit, such as a capacitor. The energy storage unit, after obtaining the energy, may drive a low-power consumption chip circuit of the semi-passive zero-power consumption terminal, to implement tasks such as demodulation of a forward link signal and signal modulation of a back scattering link, etc. For the back scattering link, the semi-passive zero-power consumption terminal performs the transmission of the signal by using the back scattering implementation.

It can be seen that, either for the forward link or the back scattering link, the semi-passive zero-power consumption terminal does not need the internal battery to drive the low-power consumption chip circuit, and although the semi-passive zero-power consumption terminal has the energy storage unit for energy storage, its energy still comes from the radio energy harvested by the RF energy harvesting module. Therefore, the semi-passive zero-power consumption terminal is also a true zero-power consumption terminal.

Additionally, the semi-passive zero-power consumption terminal inherits many of advantages of the passive zero-power consumption terminal, and therefore, the semi-passive zero-power consumption terminal has many advantages such as small size, light weight, very cheap price, and long service life, etc.

### (3) Active zero-power consumption terminal

The zero-power consumption terminal used in some scenarios may also be an active zero-power consumption terminal, this type of terminal may have an internal battery, which is used to drive the low-power consumption chip circuit of the zero-power consumption terminal, to implement tasks such as demodulation of a forward link signal and signal modulation of a back scattering link. However, for the back scattering link, this type of terminal may perform the transmission of the signal by using a back scattering implementation. Therefore, the zero-power consumption of this type of terminal is mainly due to the fact that the signal transmission of the back scattering link does not need to consume the power of this type of terminal itself, but uses a method of back scattering.

An internal battery of the active zero-power consumption terminal may supply energy to the low-power consumption chip circuit, to increase a reading and writing distance of the active zero-power consumption terminal and improve the reliability of communication. Therefore, the active zero-power consumption terminal may be applied in some scenarios with relatively high requirements on a communication distance, a reading latency, etc.

### 2. Technology principle of zero-power consumption communication

The zero-power consumption communication uses an energy harvesting and back scattering communication technology. A zero-power consumption communication network is formed by a carrier transmitting device and a zero-power consumption terminal, and as shown in FIG. 2, the zero-power consumption terminal here may be the semi-passive zero-power consumption terminal mentioned above. Herein, the carrier transmitting device is used to transmit a carrier signal and a downlink communication signal to the zero-power consumption terminal, and receive a back scattering signal of the zero-power consumption terminal. The zero-power consumption terminal may include an RF energy harvesting module, a back scattering communication module, and a low-power consumption chip circuit. In addition, the zero-power consumption terminal may also have a memory for storing some basic information (such as object identifier, etc.), and may also include a sensor for acquiring sensing data such as ambient temperature and ambient humidity.

In the embodiments of the present disclosure, the carrier signal is used to supply energy to the zero-power consumption terminal, to trigger the zero-power consumption terminal to work. Therefore, the carrier signal is also referred to as an energy supply signal or a trigger signal.

A key technology of the zero-power consumption communication mainly includes wireless RF energy harvesting and back scattering communication.

As shown in FIG. 3, the zero-power consumption terminal receives a carrier signal transmitted by the carrier transmitting device, harvests energy by the RF energy harvesting module, and then supplies energy to the low-power consumption chip circuit, modulates the carrier signal, and performs back scattering, where the main features are as follows:
(1) the zero-power consumption terminal does not actively transmit a signal, but implements the back scattering communication by modulating the carrier signal;
(2) the zero-power consumption terminal does not rely on a traditional active power amplifier transmitter, but uses the low-power consumption chip circuit, which greatly reduces the hardware complexity;
(3) battery-free communication may be achieved in conjunction with energy harvesting.

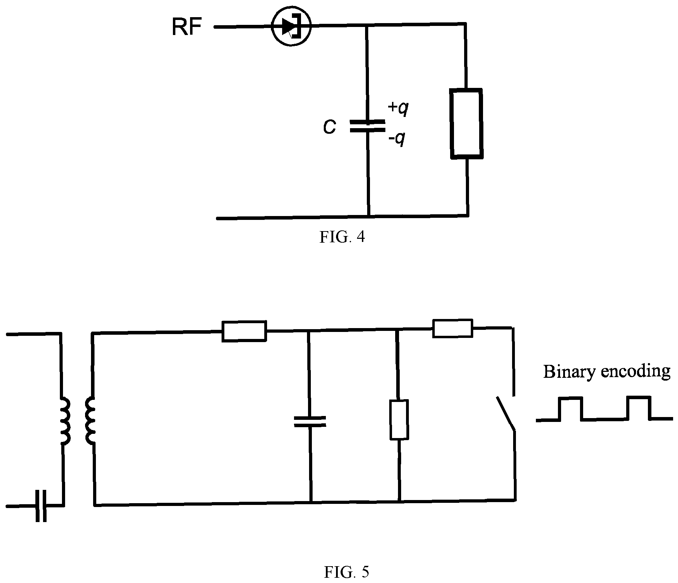

As shown in FIG. 4, the zero-power consumption terminal may utilize the RF energy harvesting module, to harvest electromagnetic wave energy in space through electromagnetic induction, thereby driving the low-power consumption chip circuit, the sensor, etc.

Load modulation is a method often used by the zero-power consumption terminal to transmit data to the carrier transmitting device. The load modulation changes the magnitude and phase of the impedance of the zero-power consumption terminal, by adjusting an electrical parameter of an oscillation circuit of the zero-power consumption terminal according to a rhythm of a data stream, thereby completing the modulation procedure. The load modulation technology mainly has two methods: resistive load modulation and capacitive load modulation.

In the resistive load modulation, the load is connected in parallel with a resistor, referred to as a load modulation resistor, the resistor is turned on and off according to a clock of the data stream, and the on and off of a switch S are controlled by binary data encoding. A circuit principle of the resistive load modulation is shown in FIG. 5.

In the capacitive load modulation, the load is connected in parallel with a capacitor, replacing the load modulation resistor controlled by the binary data encoding in FIG. 5.

Data transmitted by the zero-power consumption terminal may be represented as binary "1" and "0" by using different forms of codes. A wireless radio frequency identification system usually uses one of the following encoding methods: Non Return Zero (NRZ) encoding, Manchester encoding, Unipolar RZ encoding, Differential Bi-Phase (DBP) encoding, Miller encoding and differential encoding. In general terms, 0 and 1 are represented by using different pulse signals.

It should be understood that the embodiments of the present disclosure may be applied to an unlicensed spectrum.

The unlicensed spectrum is a spectrum divided by countries and regions that may be used for communication of radio devices, and the spectrum is generally considered to be a shared spectrum, that is, as long as communication devices in different communication systems meet regulatory requirements set on the spectrum by countries or regions, the communication device may use the spectrum, without applying to the government for a dedicated spectrum license. In order to enable the friendly coexistence of various communication systems that use the unlicensed spectrum for wireless communication on the spectrum, some countries or regions have specified requirements that must be met for the use of the unlicensed spectrum. For example, in the European region, the communication device follows a "Listen-Before-Talk (LBT)" principle, that is, the communication device, before transmitting a signal on a channel of the unlicensed spectrum, needs to first perform channel listening, and the communication device can transmit a signal, only when a channel listening result is that the channel is idle; if the channel listening result of the communication device on the channel of the unlicensed spectrum is that the channel is busy, the communication device can not transmit a signal. In addition, in order to ensure fairness, during one transmission, the duration of the signal transmission using the channel of the unlicensed spectrum by the communication device can not exceed a maximum channel occupancy time (MCOT). In order to avoid the sub-band interference to the signal transmitted on the unlicensed spectrum channel and to improve the accuracy of the detection of the communication device when detecting the channel of the unlicensed spectrum, a design of the unlicensed spectrum should meet a related requirement of the OCB, that is, a signal transmission bandwidth should occupy a certain preset proportion of a channel bandwidth. For example, the signal transmission bandwidth occupies 80% of a 5 GHz frequency band or the signal transmission bandwidth occupies 70% of a 60 GHz frequency band. Then, for the zero-power consumption terminal, how to make the back scattering signal meet the OCB requirement is a technical problem to be solved urgently in this application.

It should be understood that in the present disclosure, the signal transmission bandwidth is also referred to as a spectrum bandwidth occupied by the signal. The channel bandwidth is also referred to as a system channel bandwidth.

It should be understood that in the present disclosure, a subcarrier spacing is allowed to exist within the signal transmission bandwidth, that is, the above-mentioned channel transmission bandwidth is a channel transmission bandwidth formed between a lowest frequency point and a highest frequency point.

In order to solve the above technical problem, the present disclosure makes the back scattering signal meet the OCB requirement, considering a relationship between the carrier signal and the back scattering signal, based on the design of the frequency-domain resource of the carrier signal.

The technical solutions of the present disclosure will be described in detail below.

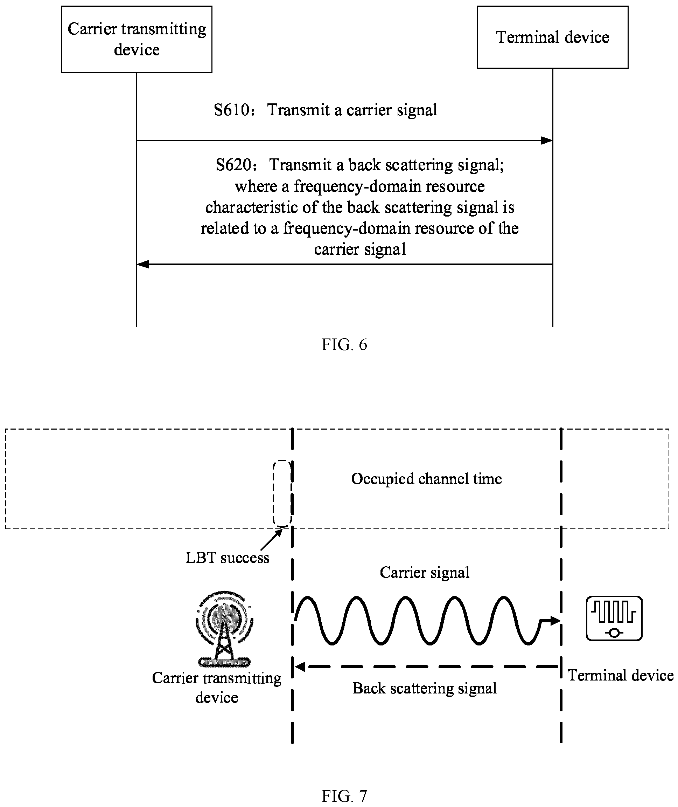

FIG.6 is a flow chart of a wireless communication method, provided by the embodiments of the present disclosure, and as shown in FIG.6, the method includes following steps:
S610: transmitting by a carrier transmitting device, a carrier signal to a terminal device;
S620: transmitting by the terminal device, a back scattering signal to the carrier transmitting device according to the carrier signal; where a frequency-domain resource characteristic of the back scattering signal is related to a frequency-domain resource of the carrier signal.

Optionally, the terminal device may or may not perform LBT before transmitting the back scattering signal.

Exemplarily, the terminal device may regard the carrier signal and the back scattering signal as one signal, and therefore, the carrier transmitting device needs to perform the LBT before transmitting the carrier signal, but for the terminal device, it does not need to perform the LBT again. Or, the terminal device may regard the carrier signal and the back scattering signal as different signals, but the back scattering signal may share a channel occupation time (COT) obtained by the carrier transmitting device by performing the LBT before transmitting the carrier signal. FIG. 7 is a schematic diagram of a transmission of a carrier signal and a back scattering signal, provided by the embodiments of the present disclosure. As shown in FIG. 7, the carrier transmitting device performs the LBT, and when the LBT is successful, the carrier transmitting device transmits the carrier signal during the channel occupation time, and at the same time, the terminal device performs the back scattering for the carrier signal.

It should be understood that in the NR-U technology, after the carrier transmitting device initiates the LBT, in addition to using resources within the COT for a downlink transmission, the resources within the COT may be shared with the terminal device for an uplink transmission. Herein, a channel access method that may be used by the terminal device is a Type2A channel access, a Type2B channel access or a Type2C channel access, where under the Type2C channel access method, the terminal device may directly perform an uplink transmission, and a gap size between a starting position of the uplink transmission and an end position of a last uplink transmission needs to be less than or equal to 16µs. The length of the uplink transmission does not exceed 584µs. In the present disclosure, the terminal device, when transmitting a back scattering signal, uses a channel access method similar to the Type2C channel access method to directly perform a transmission of the back scattering signal. The difference is that, since the back scattering signal relies on the transmission of the carrier signal, and if the carrier signal is not interrupted, the duration of the transmission of the back scattering signal may be not limited by the Type2C channel access method.

It should be understood that the terminal device may modulate the carrier signal and transmit the modulated signal to the carrier transmitting device with the back scattering method. Since the terminal device uses the back scattering method to transmit the modulated signal, the modulated signal is also referred to as the back scattering signal.

Optionally, a frequency-domain resource characteristic of the back scattering signal may be an OCB of the back scattering signal, but not limited thereto.

Optionally, the back scattering signal has the same OCB requirement to meet as the carrier signal. For example, the OCB requirement for both is that the occupied signal bandwidth occupies 80% of the channel bandwidth.

Optionally, for a signal bandwidth occupied by the carrier signal, a signal bandwidth occupied by the back scattering signal, and channel bandwidths corresponding to the two signals respectively, there may be several cases as follows, but not limited thereto.

Case 1, since the terminal device does not generate a signal by itself, but generates the back scattering signal by modulating and reflecting the carrier signal. The modulation of the carrier signal is usually carried out by some simple modulation, such as Amplitude Shift Keying (ASK) modulation, and the essence of the modulation is to change an amplitude of the signal to carry information. Usually, the modulated data rate is very low, and therefore, the signal bandwidth occupied by the back scattering signal is the same as or similar to the signal bandwidth occupied by the carrier signal, and the channel bandwidths corresponding to the two are also the same or similar. In this case, if the carrier signal meets the OCB requirement, then it may be assumed that the back scattering signal also meets the OCB requirement.

Exemplarily, assuming that the OCB requirement for the back scattering signal is that: the signal transmission bandwidth needs to occupy 80% of the channel bandwidth, then it is sufficient for the corresponding carrier signal to occupy 80% of the channel bandwidth.

Case 2, the channel bandwidths corresponding to the back scattering signal and the carrier signal may be different, and the signal bandwidth occupied by the carrier signal may be the same as or similar to the signal bandwidth occupied by the back scattering signal. In this case, as long as the carrier signal meets the OCB requirement on a channel corresponding to the back scattering signal, it may be considered that the back scattering signal also meets the OCB requirement. In other words, in this case, a frequency-domain resource of the carrier signal is related to a bandwidth of a channel on which the back scattering signal is located.

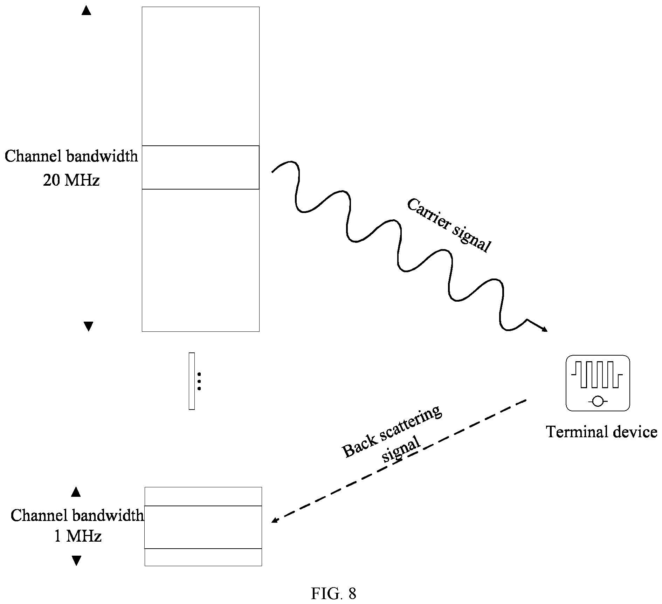

Exemplarily, FIG. 8 is schematic diagram of another transmission of a carrier signal and a back scattering signal, provided by the embodiments of the present disclosure. As shown in FIG. 8, assuming that a channel bandwidth on which the carrier signal is located is 20MHz, and a channel bandwidth on which the back scattering signal is located is 1MHz, where shaded parts represent an occupied signal bandwidth. In order to make the back scattering signal meet the OCB requirement, the bandwidth of the carrier signal only needs to meet the OCB under the channel bandwidth of 1MHz.

In conclusion, in the present disclosure, considering that the frequency-domain resource characteristic of the back scattering signal is related to the frequency-domain resource of the carrier signal, the terminal device does not need to judge whether the back scattering signal meets the OCB requirement by itself, and the carrier transmitting device only needs to properly set the frequency-domain resource occupied by the carrier signal, that is, the bandwidth occupied by the carrier signal, so that the back scattering signal may meet the OCB requirement, and thus, the power consumption of the terminal device may be reduced.

Optionally, the frequency-domain resource on which the carrier signal is located may be a continuous frequency-domain resource or a non-continuous frequency-domain resource. In other words, either in the above Case 1 or the above Case 2, the frequency-domain resource on which the carrier signal is located may be a continuous frequency-domain resource or a non-continuous frequency-domain resource, which is not limited by the present disclosure.

It should be understood that for the carrier transmitting device, the carrier signal itself is also a resource overhead, and if the carrier signal occupies a large bandwidth, it is a waste of the frequency-domain resource. Based on this, the above-mentioned carrier signal may be a non-continuous frequency-domain resource, for example, a frequency-domain resource with an interlace structure.

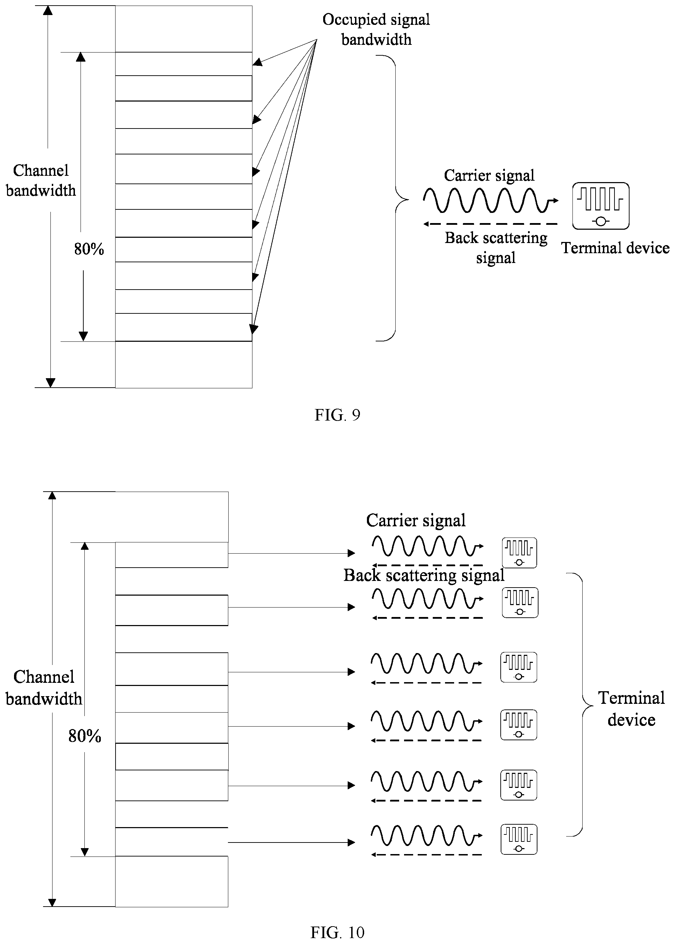

Exemplarily, FIG. 9 is a schematic diagram of an interlace structure of a carrier signal, provided by the embodiments of the present disclosure. As shown in FIG. 9, the carrier signal is the interlace structure, shaded parts of the interlace structure represent sub-bands used to transmit the carrier signal, and blank parts of the interlace structure represent sub-bands not used to transmit the carrier signal, and the signal bandwidth occupied by the carrier signal occupies 80% of the channel bandwidth, and the OCB requirement is that the signal bandwidth occupies 80% of the channel bandwidth, therefore, the carrier signal meets the OCB requirement. Considering that the signal bandwidth occupied by the back scattering signal is the same as or similar to the signal bandwidth occupied by the carrier signal, and the channel bandwidths corresponding to the two are also the same or similar, it can be seen that the back scattering signal also meets the OCB requirement. In addition, due to the setting of the interlace structure of the carrier signal, the resource overhead of the carrier transmitting device is reduced.

Optionally, the terminal device may have one or more back scattering channels, which may be used to transmit back scattering signals. For example, in an example shown in FIG. 9, the terminal device has one back scattering channel. It may also be understood that the terminal device may have one or more zero-power consumption modules.

Optionally, considering that the terminal device may have one or more back scattering channels, then the above-mentioned carrier signal may include N carrier signals, where N is a positive integer, that is, the above-mentioned carrier signal is N carrier signals; the back scattering signal includes M back scattering signals, where M is a positive integer.

Optionally, there is a certain subcarrier spacing between the N carrier signals.

Optionally, the N carrier signals may be N parallel signals.

Optionally, the subcarrier spacing may be predefined, indicated by the carrier transmitting device, or indicated by a third party device, which is not limited by the present disclosure.

Optionally, N is equal to M, or N is less than M, or N is greater than M, which is not limited by the present disclosure.

Optionally, there is a correspondence between the N carrier signals and the M back scattering signals.

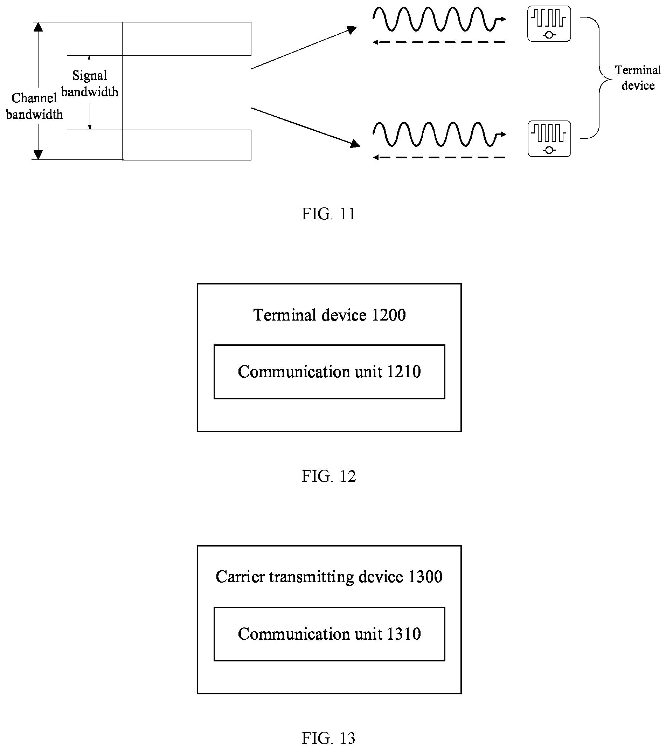

Exemplarily, as shown in FIG. 10, when N is equal to M, there may be a one-to-one correspondence between the N carrier signals and the M back scattering signals, but not limited thereto. As shown in FIG. 11, when N is less than M, there may be a one-to-many correspondence between the N carrier signals and the M back scattering signals, but not limited thereto. As shown in FIG. 9, when N is greater than M, there may be a many-to-one correspondence between the N carrier signals and the M back scattering signals, but not limited thereto.

Optionally, the correspondence between the N carrier signals and the M back scattering signals is predefined, indicated by the carrier transmitting device, or indicated by a third party device, which is not limited by the present disclosure.

Optionally, in a case where the M back scattering signals are a plurality of back scattering signals, the plurality of back scattering signals carry same information, that is, the plurality of back scattering signals are completely the same.

Exemplarily, it is assumed that there are three back scattering signals, and these three back scattering signals all carry an identifier of the terminal device.

Optionally, in a case where the M back scattering signals are a plurality of back scattering signals, at least two back scattering signals of the plurality of back scattering signals carry different information.

Exemplarily, it is assumed that there are three back scattering signals, where one of the three back scattering signals carries an identifier of the terminal device, and the other two back scattering signals both carry data 1. For another example: it is assumed that there are three back scattering signals, where one of the three back scattering signals carries an identifier of the terminal device, and the other two back scattering signals carry data 1 and data 2 respectively.

Optionally, in a case where the carrier signal is multi-path carrier signals, a frequency-domain resource on which each carrier signal is located may be a continuous frequency-domain resource or a non-continuous frequency-domain resource. For example, as shown in FIG. 10, frequency-domain resources on which 6 carrier signals are located are all continuous frequency-domain resources.

Optionally, in a case where the carrier signal is a single-path carrier signal, a frequency-domain resource on which the carrier signal is located may be a continuous frequency-domain resource or a non-continuous frequency-domain resource. For example, as shown in FIG. 9, the frequency-domain resource on which the carrier signal is located is a non-continuous frequency-domain resource.

Optionally, the frequency-domain resource of the carrier signal is predefined, indicated by the carrier transmitting device, or indicated by a third party device, but not limited thereto.

Optionally, the terminal device may transmit capability information of the terminal device to the carrier transmitting device, where the frequency-domain resource of the carrier signal is related to the capability information of the terminal device.

In other words, the carrier transmitting device may determine the frequency-domain resource of the carrier signal according to the capability information of the terminal device.

Optionally, the carrier transmitting device may determine the frequency-domain resource of the carrier signal according to the capability information of the terminal device and the frequency-domain resource characteristic of the back scattering signal.

Optionally, the capability information of the terminal device includes: a number of back scattering channels possessed by the terminal device, but not limited thereto.

Exemplarily, if the terminal device has a back scattering channel, at this time, the carrier transmitting device may set the carrier single as an interlace structure as shown in FIG. 9, and the setting of the bandwidth of the carrier signal enables the back scattering signal to meet the OCB requirement.

Exemplarily, if the terminal device has a plurality of back scattering channels, at this time, the carrier transmitting device may set the carrier signal as multi-path signals as shown in FIG. 10, and the setting of the bandwidth of the carrier signal enables the back scattering signal to meet the OCB requirement.

Optionally, the carrier transmitting device may transmit a transmission method of the carrier signal to the terminal device, and the terminal device determines a transmission method of the back scattering signal according to the transmission method of the carrier signal.

Optionally, the transmission method of the carrier signal may be a transmission method in the form of an interlace structure, or a transmission method of occupying continuous frequency-domain resources, or a transmission method in the form of multi-path, which is not limited by the present disclosure.

Optionally, the transmission method of the back scattering signal may be that one back scattering signal is transmitted through one back scattering channel, or a plurality of back scattering signals are transmitted through a plurality of back scattering channels, which is not limited by the present disclosure.

Exemplarily, if the carrier transmitting device indicates to the terminal device that the transmission method of the carrier signal thereof is the transmission method in the form of the interlace structure, the terminal device may transmit one back scattering signal through one back scattering channel. If the carrier transmitting device indicates to the terminal device that the transmission method of the carrier signal thereof is the transmission method in the form of multi-path, the terminal device may transmit a plurality of back scattering signals through a plurality of back scattering channels.

In conclusion, in the present disclosure, the frequency-domain resource on which the carrier signal is located may be a continuous or non-continuous frequency-domain resource, and the carrier signal may also be multi-path signals to implement the flexible transmission of the carrier signal. In addition, if the frequency-domain resource on which the carrier signal is located is a non-continuous frequency-domain resource, or the carrier signal is multi-path signals, and there is a certain subcarrier spacing between the multi-path signals, the frequency-domain resource may be saved.

FIG. 12 is a schematic diagram of a terminal device1200, provided by the embodiments of the present disclosure, and the terminal device 1200 includes: a communication unit 1210, configured to: receive a carrier signal transmitted by a carrier transmitting device; transmit a back scattering signal to the carrier transmitting device according to the carrier signal; where a frequency-domain resource characteristic of the back scattering signal is related to a frequency-domain resource of the carrier signal.

Optionally, the frequency-domain resource on which the carrier signal is located is non-continuous.

Optionally, the carrier signal is a signal with a frequency-domain interlace structure.

Optionally, the carrier signal includes N carrier signals, N is a positive integer; and the back scattering signal includes M back scattering signals, M is a positive integer.

Optionally, there is a correspondence between the N carrier signals and the M back scattering signals.

Optionally, the correspondence between the N carrier signals and the M back scattering signals is predefined, indicated by the carrier transmitting device, or indicated by a third party device.

Optionally, in a case where the M back scattering signals are a plurality of back scattering signals, the plurality of back scattering signals carry same information.

Optionally, in a case where the M back scattering signals are a plurality of back scattering signals, at least two back scattering signals of the plurality of back scattering signals carry different information.

Optionally, the frequency-domain resource of the carrier signal is predefined, indicated by the carrier transmitting device, or indicated by a third party device.

Optionally, the communication unit 1210 is further configured to: transmit capability information of a terminal device to the carrier transmitting device; where the frequency-domain resource of the carrier signal is related to the capability information of the terminal device.

Optionally, the capability information of the terminal device includes: a number of back scattering channels possessed by the terminal device.

Optionally, the frequency-domain resource of the carrier signal is related to a bandwidth of a channel on which the back scattering signal is located.

Optionally, the frequency-domain resource characteristic is an OCB.

In some implementations, the above communication unit may be a communication interface or a transceiver, or an input and output interface of a communication chip or a system-on-chip.

It should be understood that the terminal device 1200 according to the embodiments of the present disclosure may correspond to the terminal device in the method embodiments of the present disclosure, and the above and other operations and/or functions of various units in the terminal device 1200 are respectively to implement the corresponding procedure of the terminal device in the method embodiments, which will not be repeated here for the sake of brevity.

FIG. 13 is a schematic diagram of a carrier transmitting device 1300, provided by the embodiments of the present disclosure, and the terminal device 1300 includes: a communication unit 1310, configured to: transmit a carrier signal to a terminal device, so that the terminal device transmits a back scattering signal to the carrier transmitting device according to the carrier signal; where a frequency-domain resource characteristic of the back scattering signal is related to a frequency-domain resource of the carrier signal.

Optionally, the frequency-domain resource on which the carrier signal is located is non-continuous.

Optionally, the carrier signal is a signal with a frequency-domain interlace structure.

Optionally, the carrier signal includes N carrier signals, N is a positive integer; and the back scattering signal includes M back scattering signals, M is a positive integer.

Optionally, there is a correspondence between the N carrier signals and the M back scattering signals.

Optionally, the correspondence between the N carrier signals and the M back scattering signals is predefined, indicated by the carrier transmitting device, or indicated by a third party device.

Optionally, in a case where the M back scattering signals are a plurality of back scattering signals, the plurality of back scattering signals carry same information.

Optionally, in a case where the M back scattering signals are a plurality of back scattering signals, at least two back scattering signals of the plurality of back scattering signals carry different information.

Optionally, the frequency-domain resource of the carrier signal is predefined, indicated by the carrier transmitting device, or indicated by a third party device.

Optionally, the communication unit 1310 is further configured to: receive capability information of the terminal device; where the frequency-domain resource of the carrier signal is related to the capability information of the terminal device.

Optionally, the capability information of the terminal device includes: a number of back scattering channels possessed by the terminal device.

Optionally, the frequency-domain resource of the carrier signal is related to a bandwidth of a channel on which the back scattering signal is located.

Optionally, the frequency-domain resource characteristic is an OCB.

In some implementations, the above communication unit may be a communication interface or a transceiver, or an input and output interface of a communication chip or a system-on-chip.

It should be understood that the carrier transmitting device 1300 according to the embodiments of the present disclosure may correspond to the carrier transmitting device in the method embodiments of the present disclosure, and the above and other operations and/or functions of various units in the carrier transmitting device 1300 are respectively to implement the corresponding procedure of the carrier transmitting device in the method embodiments, which will not be repeated here for the sake of brevity.

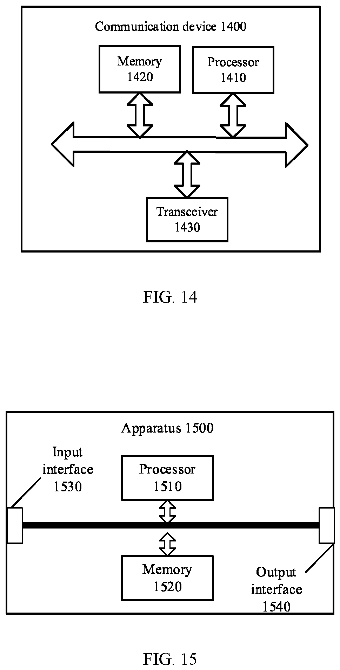

FIG. 14 is a schematic structural diagram of a communication device 1400, provided by the embodiments of the present disclosure. The communication device 1400 shown in FIG. 14 includes a processor 1410. The processor 1410 may invoke and execute a computer program from a memory to implement the method in the embodiments of the present disclosure.

Optionally, as shown in FIG. 14, the communication device 1400 may further include a memory 1420. Herein, the processor 1410 may invoke and execute a computer program from the memory 1420 to implement the method in the embodiments of the present disclosure.

Herein, the memory 1420 may be a separate device independent from the processor 1410, or may also be integrated into the processor 1410.

Optionally, as shown in FIG. 14, the communication device 1400 may also include a transceiver 1430, and the processor 1410 may control the transceiver 1430 to communicate with other devices, and specifically, the transceiver 1430 may send information or data to other devices, or receive information or data sent by other devices.

Herein, the transceiver 1430 may include a transmitter and a receiver. The transceiver 1430 may further include antennas, and the number of antennas may be one or more.

Optionally, the communication device 1400 may specifically be the carrier transmitting device of the embodiments of the present disclosure, and the communication device 1400 may implement the corresponding procedure implemented by the carrier transmitting device in the various methods of the embodiments of the present disclosure, which will not be repeated here for the sake of brevity.

Optionally, the communication device 1400 may specifically be the terminal device of the embodiments of the present disclosure, and the communication device 1400 may implement the corresponding procedures implemented by the terminal device in the various methods of the embodiments of the present disclosure, which will not be repeated here for the sake of brevity.

FIG. 15 is a schematic structural diagram of an apparatus of the embodiments of the present disclosure. The apparatus 1500 shown in FIG. 15 includes a processor 1510, the processor 1510 may invoke and execute a computer program from a memory to implement the method in the embodiments of the present disclosure.

Optionally, as shown in FIG. 15, the apparatus 1500 may further include a memory 1520. Herein, the processor 1510 may invoke and execute a computer program from the memory 1520 to implement the method in the embodiments of the present disclosure.

Herein, the memory 1520 may be a separate device independent from the processor 1510, or may also be integrated into the processor 1510.

Optionally, the apparatus 1500 may further include an input interface 1530. Herein, the processor 1510 may control the input interface 1530 to communicate with other devices or chips, and specifically, the input interface 1530 may acquire information or data sent by other devices or chips.

Optionally, the apparatus 1500 may further include an output interface 1540. Herein, the processor 1510 may control the output interface 1540 to communicate with other devices or chips, and specifically, the output interface 1540 may output information or data to other devices or chips.

Optionally, the apparatus may be applied to the carrier transmitting device in the embodiments of the present disclosure, and the apparatus may implement the corresponding procedure implemented by the carrier transmitting device in the various methods of the embodiments of the present disclosure, which will not be repeated here for the sake of brevity.

Optionally, the apparatus may be applied to the terminal device in the embodiments of the present disclosure, and the apparatus may implement the corresponding procedure implemented by the terminal device in the various methods of the embodiments of the present disclosure, which will not be repeated here for the sake of brevity.

Optionally, the apparatus mentioned in the embodiments of the present disclosure may also be a chip. For example, it may be a system on chip, a system chip, a chip system or a system-on-chip chip, etc.

It should be understood that the processor in the embodiments of the present disclosure may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present disclosure may be implemented or performed. A general-purpose processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present disclosure may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

The embodiments of the present disclosure further provide a computer readable storage medium for storing a computer program.

Optionally, the computer readable storage medium may be applied to the carrier transmitting device or the base station in the embodiments of the present disclosure, and the computer program causes a computer to perform the corresponding procedure implemented by the carrier transmitting device or the base station in the various methods of the embodiments of the present disclosure, which will not be repeated here for the sake of brevity.

Optionally, the computer readable storage medium may be applied to the mobile terminal/terminal device in the embodiments of the present disclosure, and the computer program causes a computer to perform the corresponding procedure implemented by the mobile terminal/terminal device in various methods of the embodiments of the present disclosure, which will not be repeated here for the sake of brevity.

The embodiments of the present disclosure further provide a computer program product including a computer program instruction.

Optionally, the computer program product may be applied to the carrier transmitting device or the base station in the embodiments of the present disclosure, and the computer program instruction causes a computer to perform the corresponding procedure implemented by the carrier transmitting device or the base station in the various methods of the embodiments of the present disclosure, which will not be repeated here for the sake of brevity.

Optionally, the computer program product may be applied to the mobile terminal/terminal device in the embodiments of the present disclosure, and the computer program instruction causes a computer to perform the corresponding procedure implemented by the mobile terminal/terminal device in various methods of the embodiments of the present disclosure, which will not be repeated here for the sake of brevity.

The embodiments of the present disclosure further provide a computer program.

Optionally, the computer program may be applied to the carrier transmitting device or the base station in the embodiments of the present disclosure, the computer program when being executed on a computer, causes the computer to perform the corresponding procedure implemented by the carrier transmitting device or the base station in various methods of the embodiments of the present disclosure, which will not be repeated here for the sake of brevity.

Optionally, the computer program may be applied to the mobile terminal/terminal device in the embodiments of the present disclosure, the computer program when being executed on a computer, causes the computer to perform the corresponding procedure implemented by the mobile terminal/terminal device in various methods of the embodiments of the present disclosure, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the application, it should be understood that the disclosed systems, apparatus, and method may be implemented in other ways. For example, the apparatus embodiments described above are only schematic, for example, division of the units is only the division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in the form of a software functional unit and sold or used as an independent product, they may be stored in a computer readable storage medium. For this understanding, the technical solution of the present disclosure essentially, or a part of the technical solution that contributes to the prior art, or a part of the technical solution, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present disclosure. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of the claims.

## Claims

1. A wireless communication method, comprising:
receiving a carrier signal transmitted by a carrier transmitting device;
transmitting a back scattering signal to the carrier transmitting device according to the carrier signal;
wherein a frequency-domain resource characteristic of the back scattering signal is related to a frequency-domain resource of the carrier signal.

2. The method according to claim 1, wherein the frequency-domain resource on which the carrier signal is located is non-continuous.

3. The method according to claim 2, wherein the carrier signal is a signal with a frequency-domain interlace structure.

4. The method according to claim 1, wherein the carrier signal comprises N carrier signals, N is a positive integer; and the back scattering signal comprises M back scattering signals, M is a positive integer.

5. The method according to claim 4, wherein there is a correspondence between the N carrier signals and the M back scattering signals.

6. The method according to claim 5, wherein the correspondence is predefined, indicated by the carrier transmitting device, or indicated by a third party device.

7. The method according to any one of claims 4 to 6, wherein in a case where the M back scattering signals are a plurality of back scattering signals, the plurality of back scattering signals carry same information.

8. The method according to any one of claims 4 to 6, wherein in a case where the M back scattering signals are a plurality of back scattering signals, at least two back scattering signals of the plurality of back scattering signals carry different information.

9. The method according to any one of claims 2 to 8, wherein the frequency-domain resource of the carrier signal is predefined, indicated by the carrier transmitting device, or indicated by a third party device.

10. The method according to any one of claims 2 to 9, further comprising:
transmitting capability information of a terminal device to the carrier transmitting device;
wherein the frequency-domain resource of the carrier signal is related to the capability information of the terminal device.

11. The method according to claim 10, wherein the capability information of the terminal device comprises: a number of back scattering channels possessed by the terminal device.

12. The method according to claim 1, wherein the frequency-domain resource of the carrier signal is related to a bandwidth of a channel on which the back scattering signal is located.

13. The method according to any one of claims 1 to 12, wherein the frequency-domain resource characteristic is an occupied channel bandwidth (OCB).

14. A wireless communication method, comprising:
transmitting a carrier signal to a terminal device, so that the terminal device transmits a back scattering signal to the carrier transmitting device according to the carrier signal;
wherein a frequency-domain resource characteristic of the back scattering signal is related to a frequency-domain resource of the carrier signal.

15. The method according to claim 14, wherein the frequency-domain resource on which the carrier signal is located is non-continuous.

16. The method according to claim 15, wherein the carrier signal is a signal with a frequency-domain interlace structure.

17. The method according to claim 14, wherein the carrier signal comprises N carrier signals, N is a positive integer; and the back scattering signal comprises M back scattering signals, M is a positive integer.

18. The method according to claim 17, wherein there is a correspondence between the N carrier signals and the M back scattering signals.

19. The method according to claim 18, wherein the correspondence is predefined, indicated by the carrier transmitting device, or indicated by a third party device.

20. The method according to any one of claims 17 to 19, in a case where the M back scattering signals are a plurality of back scattering signals, the plurality of back scattering signals carry same information.

21. The method according to any one of claims 17 to 19, wherein in a case where the M back scattering signals are a plurality of back scattering signals, at least two back scattering signals of the plurality of back scattering signals carry different information.

22. The method according to any one of claims 15 to 21, wherein the frequency-domain resource of the carrier signal is predefined, indicated by the carrier transmitting device, or indicated by a third party device.

23. The method according to any one of claims 15 to 22, further comprising:
receiving capability information of the terminal device;
wherein the frequency-domain resource of the carrier signal is related to the capability information of the terminal device.

24. The method according to claim 23, wherein the capability information of the terminal device comprises: a number of back scattering channels possessed by the terminal device.

25. The method according to claim 14, wherein the frequency-domain resource of the carrier signal is related to a bandwidth of a channel on which the back scattering signal is located.

26. The method according to any one of claims 14 to 25, wherein the frequency-domain resource characteristic is an OCB.

27. A terminal device, comprising: a communication unit, configured to:
receive a carrier signal transmitted by a carrier transmitting device;
transmit a back scattering signal to the carrier transmitting device according to the carrier signal;
wherein a frequency-domain resource characteristic of the back scattering signal is related to a frequency-domain resource of the carrier signal.

28. A carrier transmitting device, comprising:
a communication unit, configured to transmit a carrier signal to a terminal device, so that the terminal device transmits a back scattering signal to the carrier transmitting device according to the carrier signal;
wherein a frequency-domain resource characteristic of the back scattering signal is related to a frequency-domain resource of the carrier signal.

29. A terminal device, comprising: a processor and a memory for storing a computer program, wherein the processor is configured to invoke and execute the computer program stored in the memory, to perform the method according to any one of claims 1 to 13.

30. A carrier transmitting device, comprising: a processor and a memory for storing a computer program, wherein the processor is configured to invoke and execute the computer program stored in the memory, to perform the method according to any one of claims 14 to 26.

31. A chip, comprising: a processor, configured to invoke and execute a computer program from a memory, to cause a device equipped with the chip to perform the method according to any one of claims 1 to 13.

32. A chip, comprising: a processor, configured to invoke and execute a computer program from a memory, to cause a device equipped with the chip to perform the method according to any one of claims 14 to 26.

33. A computer readable storage medium, wherein the computer readable storage medium is configured to store a computer program and the computer program causes a computer to perform the method according to any one of claims 1 to 13.

34. A computer readable storage medium, wherein the computer readable storage medium is configured to store a computer program and the computer program causes a computer to perform the method according to any one of claims 14 to 26.

35. A computer program product, comprising a computer program instruction, wherein the computer program instruction causes a computer to perform the method according to any one of claims 1 to 13.

36. A computer program product, comprising a computer program instruction, wherein the computer program instruction causes a computer to perform the method according to any one of claims 14 to 26.

37. A computer program, wherein the computer program causes a computer to perform the method according to any one of claims 1 to 13.

38. A computer program, wherein the computer program causes a computer to perform the method according to any one of claims 14 to 26.
